# EUROPEAN PATENT SPECIFICATION

(11) **EP 4 482 128 B1**
(45) Date of publication and mention of the grant of the patent: **27.05.2026**
(21) Application number: 23784963.3
(22) Date of filing: 04.04.2023
(51) Int. Cl.: H04M 1/02, H01Q 1/24, G06F 3/041, G06F 3/046, H04M 1/18

(54) **DISPLAY STRUCTURE AND ELECTRONIC DEVICE COMPRISING DISPLAY STRUCTURE**
ANZEIGESTRUKTUR UND ELEKTRONISCHE VORRICHTUNG MIT DER ANZEIGESTRUKTUR
STRUCTURE D'AFFICHAGE ET DISPOSITIF ÉLECTRONIQUE COMPRENANT UNE STRUCTURE D'AFFICHAGE

(30) Priority: 04.04.2022 KR 20220041810; 23.05.2022 KR 20220062974
(43) Date of publication of application: 25.12.2024
(73) Proprietor: Samsung Electronics Co., Ltd., Gyeonggi-do, 16677 (KR)
(72) Inventor: PARK, Sungkoo, Suwon-si, Gyeonggi-do 16677 (KR); KIM, Haeyeon, Suwon-si, Gyeonggi-do 16677 (KR); KIM, Sewoong, Suwon-si, Gyeonggi-do 16677 (KR); BANG, Museok, Suwon-si, Gyeonggi-do 16677 (KR); HWANG, Soonho, Suwon-si, Gyeonggi-do 16677 (KR)
(74) Representative: Gulde & Partner
(86) International application number: PCT/KR2023/004525
(87) International publication number: WO 2023/195739

(56) References cited:
- KR-A- 20150 023 035
- KR-A- 20190 112 535
- KR-A- 20200 018 282
- KR-A- 20200 046 246
- KR-A- 20220 012 039
- US-A1- 2018 364 869
- US-A1- 2021 249 751

## Description

### [Technical Field]

Various embodiments disclosed in this document relate to a display structure and an electronic device including the display structure.

### [Background Art]

With the advancement of display technology, various forms of displays are being implemented. An electronic device may be provided with a support plate to protect the display from external impacts applied to the display.

Meanwhile, the lateral member constituting the external appearance of the electronic device may be connected to the communication module and utilized as an antenna. In similar regards, publication US 2021/249751 A1 relates to an electronic device in which a metal frame structure defines a side surface enclosing a display and a rear plate, while at least one antenna module is housed within that side surface and coupled to a wireless communication circuit, and publication US 2018/0364869 A1 relates to an electronic device comprising a display panel, a light emitting module, and a light receiving module.

### [Disclosure of Invention]

### [Technical Problem]

A support plate may be disposed under the display panel to support the display panel from external impacts applied to the display panel. The support plate may be positioned adjacent to the antenna included in the electronic device. In an embodiment, the antenna performance may be affected by the permittivity or dielectric loss of the support plate disposed adjacent to the antenna. For example, if the permittivity of a material included in the support plate is high or the dielectric loss occurring in the support plate is high, the radiation performance of the antenna including at least a portion of the lateral member may be degraded.

Various embodiments disclosed in this document may propose an electronic device that is capable of alleviating or resolving the phenomenon of antenna radiation performance deterioration due to the support plate disposed adjacent to the antenna.

### [Solution to Problem]

An electronic device is provided corresponding to the appended claims.

### [Advantageous Effects of invention]

In various embodiments disclosed in this document, the phenomenon of radiation performance degradation of the antenna disposed adj acent to the display may be alleviated or resolved by the support plate included in the display.

### [Brief Description of Drawings]

In connection with the description of the drawings, the same or similar reference symbols may be used for identical or similar components.
FIG. 1 is a block diagram of an electronic device in a network environment according to various embodiments.
FIG. 2A is a front perspective view of the electronic device according to various embodiments disclosed in this document.
FIG. 2B is a rear perspective view of the electronic device of FIG. 2A according to various embodiments disclosed in this document.
FIG. 3 is an exploded perspective view of the electronic device of FIG. 2A according to various embodiments disclosed in this document.
FIG. 4 is an exploded perspective view of a display according to various embodiments disclosed in this document.
FIG. 5A is a cross-sectional view of the electronic device taken along line A-A in FIG. 2.
FIG. 5B is an embodiment of the stacked structure of a support plate shown in FIG. 5A.
FIG. 6A is an embodiment of a support plate structure when a digitizer panel is disposed inside the electronic device in various embodiments disclosed in this document.
FIG. 6B is an embodiment of a support plate structure when a digitizer panel is not disposed inside the electronic device in various embodiments disclosed in this document.
FIGS. 7A and 7B are diagrams illustrating the radiation performance of the antenna according to the material included in the support plate.
FIGS. 8A and 8B are views illustrating the radiation performance of the antenna including at least a portion of the lateral member according to the frequency band.

### [Mode for the Invention]

It should be appreciated that various embodiments of the present disclosure and the terms used therein are not intended to limit the technological features set forth herein to particular embodiments and include various changes, equivalents, or replacements for a corresponding embodiment, within the scope of the appended claims.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

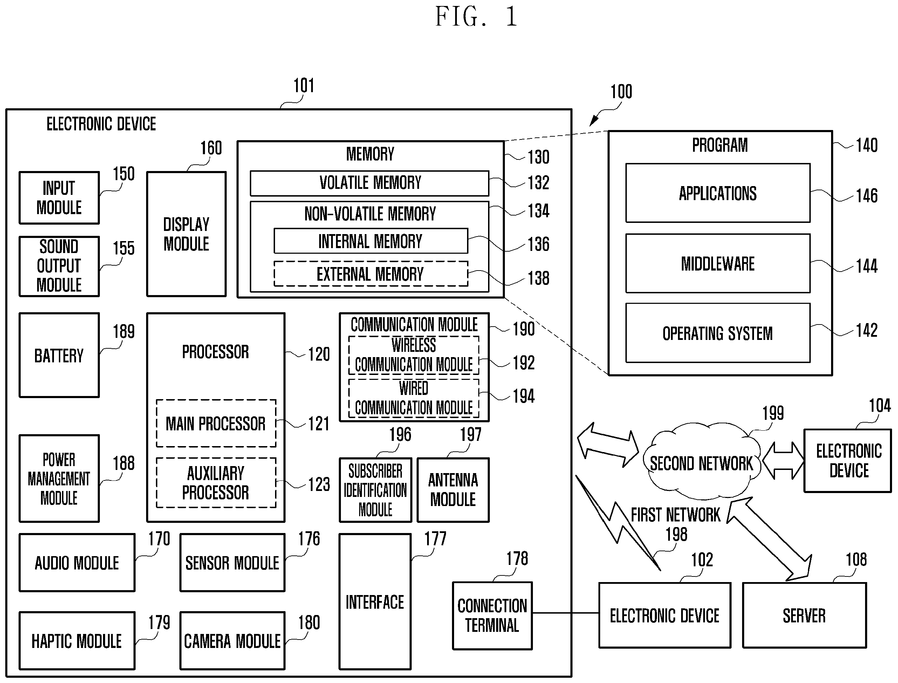

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

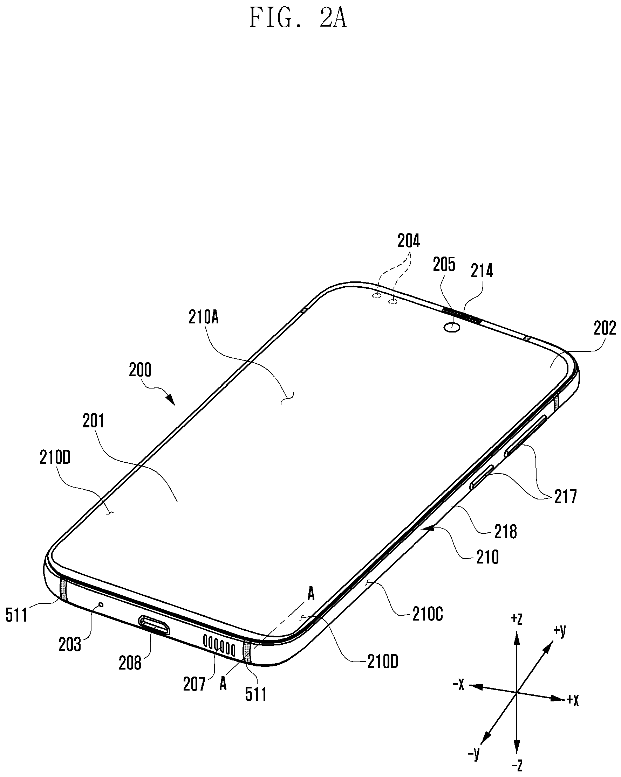

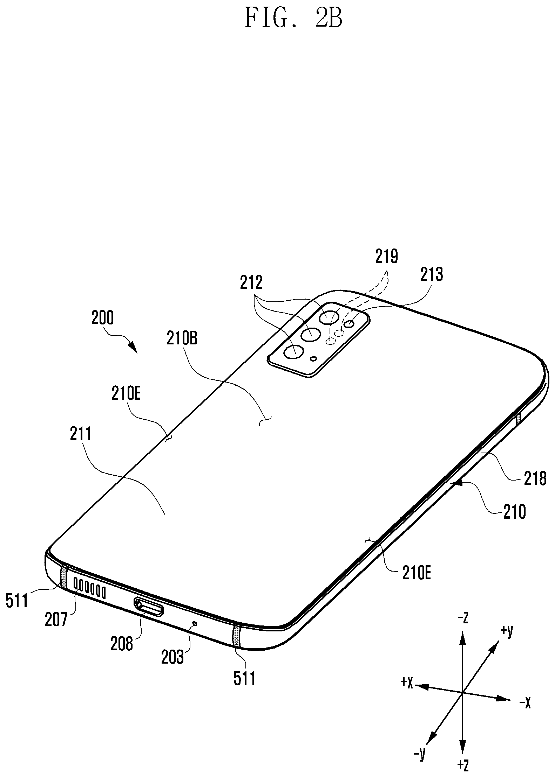

FIG. 2A is a front perspective view of an electronic device according to various embodiments of the disclosure. FIG. 2B is a rear perspective view of the electronic device of FIG. 2A according to various embodiments of the disclosure.

The electronic device 200 to be described below may include at least one of the components of the electronic device 101 described above with reference to FIG. 1.

With reference to FIG. 2A and FIG. 2B, the electronic device 200 according to an embodiment may include a housing 210 that includes a first surface (or front surface) 210A, a second surface (or rear surface) 210B, and a side surface 210C surrounding a space between the first surface 210A and the second surface 210B. According to an embodiment (not shown), the housing 210 may refer to a structure forming a part of the first surface 210A, the second surface 210B, and the side surface 210C in FIG. 2A. According to an embodiment, the first surface 210A may be formed by a front plate 202 (e.g., glass plate or polymer plate including various coating layers) whose at least a portion is substantially transparent. The second surface 210B may be formed by a rear plate 211 that is substantially opaque. The rear plate 211 may be formed by, for example, coated or tinted glass, ceramic, polymer, metal (e.g., aluminum, stainless steel (STS), or magnesium), or a combination of at least two thereof. The side surface 210C may be formed by a side bezel structure (or "side member") 218 coupled to the front plate 202 and the rear plate 211 and including a metal and/or a polymer. In a certain embodiment, the rear plate 211 and side bezel structure 218 may be integrally formed and include the same material (e.g., metal material such as aluminum).

In the illustrated embodiment, the front plate 202 may include a first region 210D that is curved and seamlessly extended from the first surface 210A toward the rear plate at opposite ends of the longer edge of the front plate 202. In the illustrated embodiment (see FIG. 2B), the rear plate 211 may include a second region 210E that is curved and seamlessly extended from the second surface 210B toward the front plate 202 respectively at opposite ends of the longer edge. In a certain embodiment, the front plate 202 or the rear plate 211 may include only one of the first region 210D and the second region 210E. In a certain embodiment, the front plate 202 may not include the first region and the second region, but may include only a flat surface disposed parallel to the second surface 210B. In the above embodiments, when the electronic device is viewed from the side thereof, the side bezel structure 218 may have a first thickness (or width) on a side where the first region 210D or the second region 210E is not included, and may have a second thickness thinner than the first thickness on a side where the first region 210D or the second region 210E is included.

According to an embodiment, the electronic device 200 may include at least one or more of display 201, input device 203, sound output devices 207 and 214, sensor modules 204 and 219, camera modules 205 and 212, key input device 217, indicator (not shown), or connector 208. In a certain embodiment, at least one of the elements (e.g., key input device 217 or indicator) may be omitted from the electronic device 200, or another element may be added to the electronic device 200.

The display 201 may be exposed, for example, through a significant portion of the front plate 202. In a certain embodiment, at least a portion of the display 201 may be exposed through the front plate 202 forming the first surface 210A and the first region 210D of the side surface 210C. The display 201 may be coupled to or disposed adjacent to a touch sensing circuit, a pressure sensor capable of measuring the intensity (pressure) of a touch, and/or a digitizer panel that detects a magnetic field type electronic pen. In a certain embodiment, at least some of the sensor modules 204 and 219, and/or at least some of the key input devices 217 may be disposed on the first region 210D and/or the second region 210E.

The input device 203 may include a microphone 203. In a certain embodiment, the input device 203 may include a plurality of microphones 203 arranged to detect the direction of a sound. The sound output devices 207 and 214 may include speakers 207 and 214. The speakers 207 and 214 may include an external speaker 207 and a call receiver 214. In a certain embodiment, the microphone 203, the speakers 207 and 214, and the connector 208 may be at least partially disposed in the internal space of the electronic device 200, and may be exposed to the external environment through at least one hole formed in the housing 210. In a certain embodiment, the hole formed in the housing 210 may be commonly used for the microphone 203 and the speakers 207 and 214. In a certain embodiment, the sound output devices 207 and 214 may include a speaker (e.g., piezo speaker) that operates in isolation from the hole formed in the housing 210.

The sensor modules 204 and 219 may generate an electrical signal or a data value corresponding to an internal operating state of the electronic device 200 or an external environmental state. The sensor modules 204 and 219 may include, for example, a first sensor module 204 (e.g., proximity sensor) and/or a second sensor module (not shown) (e.g., fingerprint sensor) disposed on the first surface 210A of the housing 210, and/or a third sensor module 219 (e.g., HRM(heart rat monitor) sensor) disposed on the second surface 210B of the housing 210. The fingerprint sensor may be disposed on the first surface 210A (e.g., home key button) of the housing 210, on a portion of the second surface 210B, and/or under the display 201. The electronic device 200 may further include a sensor module which is not shown, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, a proximity sensor, or an illuminance sensor.

The camera modules 205 and 212 may include a first camera module 205 disposed on the first surface 210A of the electronic device 200, a second camera module 212 disposed on the second surface 210B, and/or a flash 213. The camera modules 205 and 212 may include one or plural lenses, an image sensor, and/or an image signal processor. The flash 213 may include, for example, a light emitting diode or a xenon lamp. In a certain embodiment, two or more lenses (wide-angle lens, ultra-wide-angle lens, or telephoto lens) and image sensors may be arranged in one surface of the electronic device 200.

The key input devices 217 may be arranged in the side surface 210C of the housing 210. According to an embodiment, the electronic device 200 may not include some or all of the above-mentioned key input devices 217, and a key input device 217 not included may be implemented on the display 201 in a different form such as a soft key. According to an embodiment, the key input devices 217 may be implemented using a pressure sensor included in the display 201.

The indicator may be disposed on, for example, the first surface 210A of the housing 210. The indicator may provide, for example, state information of the electronic device 200 in a light form (e.g., light emitting element). According to an embodiment, the light emitting element may provide a light source interacting with, for example, the operation of the camera module 205. The indicator may include, for example, an LED(light emitting diode), an IR(infrared) LED, and/or a xenon lamp.

The connector holes 208 may include a first connector hole 208 capable of accepting a connector (e.g., universal serial bus (USB) connector) for transmitting and receiving power and/or data to and from an external electronic device, and/or a second connector hole (e.g., earphone jack) (not shown) capable of accepting a connector for transmitting and receiving an audio signal to and from an external electronic device.

Some of the camera modules 205 and 212, some of the sensor modules 204 and 219, or the indicator may be disposed to be exposed through the display 201. For example, the camera module 205, the sensor module 204, or the indicator may be arranged in the internal space of the electronic device 200 so as to be in contact with the external environment through an opening of the display 201 perforated up to the front plate 202 or a transmissive region. According to an embodiment, the region in which the display 201 and the camera module 205 face each other may be formed as a transmissive region having a preset transmittance as a part of the content display area. According to an embodiment, the transmissive region may be formed to have a transmittance in a range of about 5 percent to about 20 percent. This transmissive region may include a region overlapping an effective area (e.g., angle-of-view area) of the camera module 205 through which light passes for image generation with an image formed by an image sensor. For example, the transmissive region of the display 201 may include a region having a lower pixel density than surrounding regions. For example, the transmissive region may replace the opening. For example, the camera module 205 may include an under display camera (UDC). According to an embodiment, a certain sensor module 204 may be disposed in the internal space of the electronic device so as to perform its function without being visually exposed through the front plate 202. For example, in this case, the region of the display 201 facing the sensor module may not need a perforated opening.

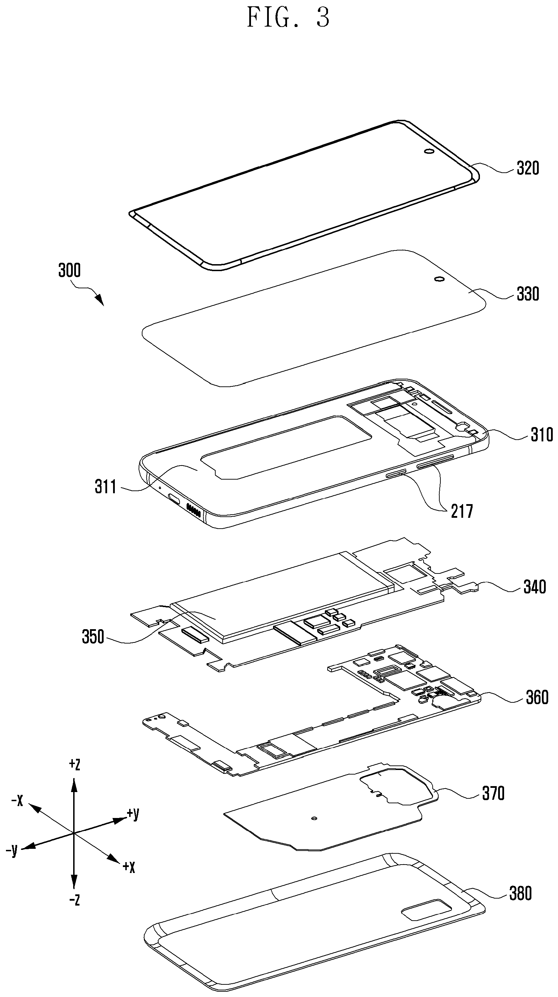

According to various embodiments, the electronic device (200) has a bar type or plate type appearance, but the present invention is not limited thereto. For example, the illustrated electronic device (200) may be part of a foldable electronic device, a slidable electronic device, a stretchable electronic device, and/or a rollable electronic device. The terms "foldable electronic device", "slidable electronic device", "stretchable electronic device" and/or "rollable electronic device" may refer to an electronic device in which a display (e.g., a display (330) of FIG. 3) is capable of bending deformation, such that at least a portion thereof may be folded, wound or rolled, at least partially expanded in area, and/or may be accommodated inside a housing (e.g., a housing (210) of FIGS. 2A and 2B). The foldable electronic device, the slidable electronic device, the stretchable electronic device and/or the rollable electronic device may be used by expanding the screen display area by unfolding the display or exposing a wider area of the display to the outside, depending on the needs of the user.

FIG. 3 is an exploded perspective view of the electronic device 200 of FIG. 2A according to various embodiments of the disclosure.

The electronic device 300 of FIG. 3 may be at least partially similar to the electronic device 200 of FIGS. 2A and 2B, or may include other embodiments of an electronic device.

With reference to FIG. 3, the electronic device 300 (e.g., electronic device 200 in FIG. 2A or 2B) may include a side member 310 (e.g., side bezel structure), a first support member 311 (e.g., bracket or support structure), a front plate 320 (e.g., front cover)(e.g., front plate 202 in FIG. 2A), a display 330 (e.g., display 201 in FIG. 2A), a board 340 (e.g., printed circuit board (PCB), flexible PCB (FPCB), or rigid-flexible PCB (RFPCB)), a battery 350, a second support member 360 (e.g., rear case), an antenna 370, and a rear plate 380 (e.g., rear cover)( e.g., rear plate 211 in FIG. 2B). In a certain embodiment, at least one of the components (e.g., first support member 311 or second support member 360) may be omitted from the electronic device 300 or other components may be additionally included therein. At least one of the components of the electronic device 300 may be the same as or similar to at least one of the components of the electronic device 200 of FIG. 2A or 2B, and repeated descriptions will be omitted below.

The first support member 311 may be disposed inside the electronic device 300 and may be connected to the side member 310 or may be integrally formed with the side member 310. The first support member 311 may be made of, for example, a metal material and/or a non-metal (e.g., polymer) material. The first support member 311 may have one surface coupled to the display 330 and the other surface coupled to the board 340. A processor (e.g., processor 120 in FIG. 1), a memory (e.g., memory 130 in FIG. 1), and/or an interface (e.g., interface 177 in FIG. 1) may be mounted on the board 340. The processor may include, for example, one or more of a central processing unit, an application processor, a graphics processing unit, an image signal processor, a sensor hub processor, and a communication processor.

The memory may include, for example, a volatile memory or a non-volatile memory.

The interface may include, for example, a high definition multimedia interface (HDMI), a universal serial bus (USB) interface, an SD (secure digital) card interface, and/or an audio interface. The interface may, for example, electrically or physically connect the electronic device 300 to an external electronic device, and may include a USB connector, an SD card/MMC (multimedia card) connector, or an audio connector.

The battery 350 is a device for supplying power to at least one component of the electronic device 300, and may include, for example, a non-rechargeable primary cell, a rechargeable secondary cell, or a fuel cell. At least a portion of the battery 350 may be disposed substantially coplanar with the board 340, for example. The battery 350 may be integrally disposed inside the electronic device 300. According to an embodiment, the battery 350 may be disposed attachably and detachably with the electronic device 300.

The antenna 370 may be disposed between the rear plate 380 and the battery 350. The antenna 370 may include, for example, a near field communication (NFC) antenna, a wireless charging antenna, and/or a magnetic secure transmission (MST) antenna. The antenna 370 may, for example, perform short-range communication with an external device or wirelessly transmit and receive power required for charging. According to an embodiment, an antenna structure may be formed by a part of the side bezel structure 310 and/or the first support member 311 or a combination thereof.

In the following description, since components similar to those of the electronic device 200 described above (e.g., electronic device 101 in FIG. 1) are included, detailed descriptions of identical components are omitted, and identical or similar components are described using the same reference symbols.

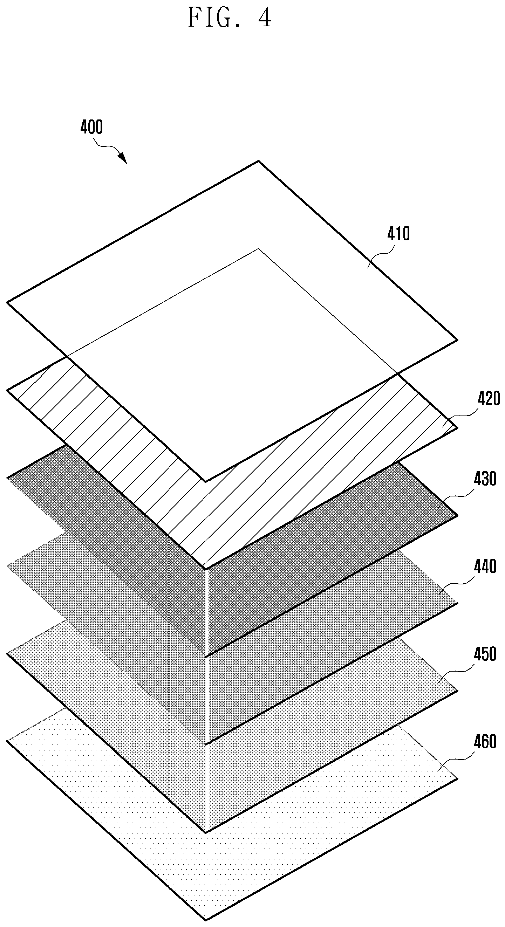

FIG. 4 is an exploded perspective view of a display according to various embodiments disclosed in this document.

The display 400 according to various embodiments disclosed in this document (e.g., display module 160 in FIG. 1, display module 230 in FIG. 2A) may include an unbreakable (UB) type OLED display (e.g., curved display). However, without being limited thereto, the display 400 may include a flat type display using the OCTA (on cell touch AMOLED (active matrix organic light-emitting diode)) technology.

According to various embodiments, as shown in FIG. 4, the display 400 may include a window layer 410, a polarizing layer 420 (e.g., polarizing film) disposed under the window layer 410, a display panel 430, a polymer layer 440, or a support plate 450. In a certain embodiment, the display 400 may include a digitizer panel 460 disposed under the support plate 450. In a certain embodiment, the digitizer panel 460 may be disposed between the polymer layer 440 and the support plate 450.

According to various embodiments, the window layer 410 may include a glass layer. According to an embodiment, the window layer 410 may include ultra- thin glass (UTG). In a certain embodiment, the window layer 410 may include a polymer. In such a case, the window layer 410 may include PET (polyethylene terephthalate) or PI (polyimide). In a certain embodiment, the window layer 410 may be arranged in multiple layers so as to include a glass layer and a polymer.

According to various embodiments, the display panel 430 may include a plurality of pixels and wiring structures. According to an embodiment, the polarizing layer 420 may selectively transmit light emitted from a light source of the display panel 430 and vibrating in a specific direction. According to an embodiment, the display panel 430 and the polarizing layer 420 may be formed integrally. According to an embodiment, the display 430 may include a touch panel (not shown).

According to various embodiments, the polymer layer 440 may be disposed under the display panel 430 to provide a dark background for securing visibility of the display panel 430 and may be made of a buffer material for buffering. In a certain embodiment, to waterproof the display 430, the polymer layer 440 may be removed or be disposed under the support plate 450.

According to various embodiments, the support plate 450 may provide the display 430 with a bending characteristic. For example, the support plate 450 may be made of a non-metallic thin-plate material having rigid properties for supporting the display panel 430, such as fiber reinforced plastics (FRP) (e.g., carbon fiber reinforced plastics (CFRP) or glass fiber reinforced plastics (GFRP)). In a certain embodiment, the support plate 450 may be made of a metal material such as SUS (steel use stainless) (e.g., STS (stainless steel)), Cu, Al, or metal CLAD (e.g., stacked member in which SUS and Al are alternately arranged). The support plate 450 may help reinforce the rigidity of the electronic device 300 (e.g., electronic device 101 in FIG. 1 or electronic device 200 in FIG. 2), shield ambient noise, and may be used to disperse heat emitted from surrounding heat-emitting components.

According to various embodiments, as shown in FIG. 4, the display 400 may include a digitizer panel 460 as a detection member that is disposed under the support plate 450 to receive input from an electronic pen (e.g., stylus). According to an embodiment, the digitizer panel 460 may include coil elements disposed on a dielectric substrate (e.g., dielectric film or dielectric sheet) so as to detect an electromagnetic induction resonance frequency applied by the electronic pen.

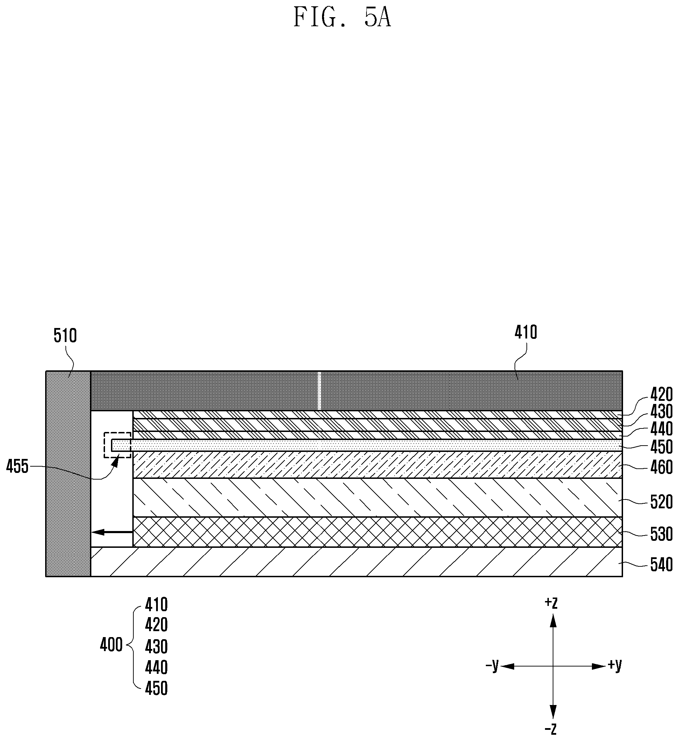

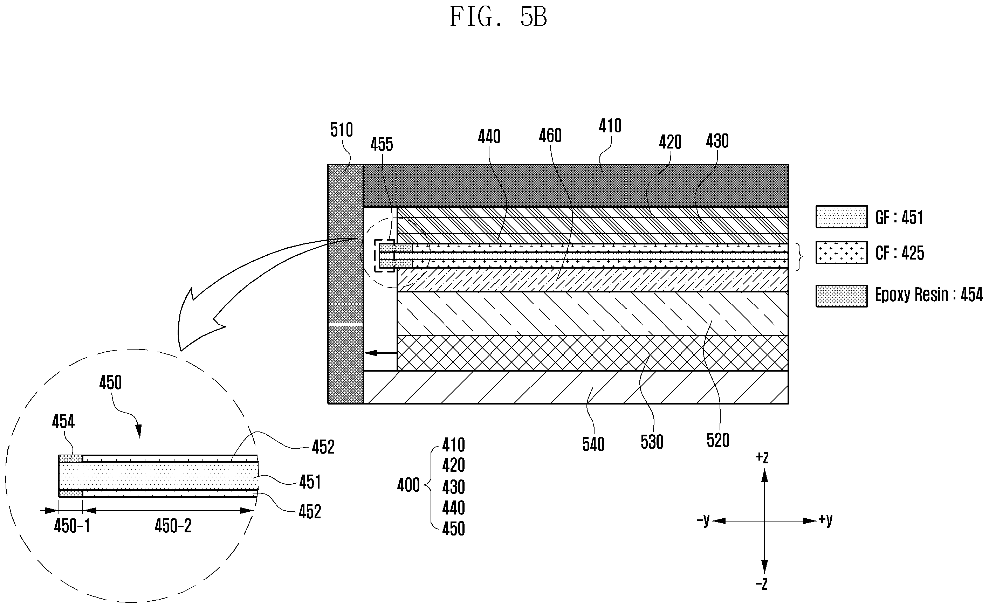

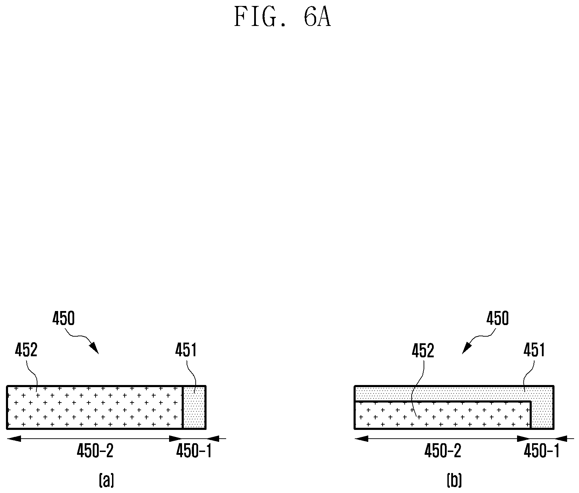

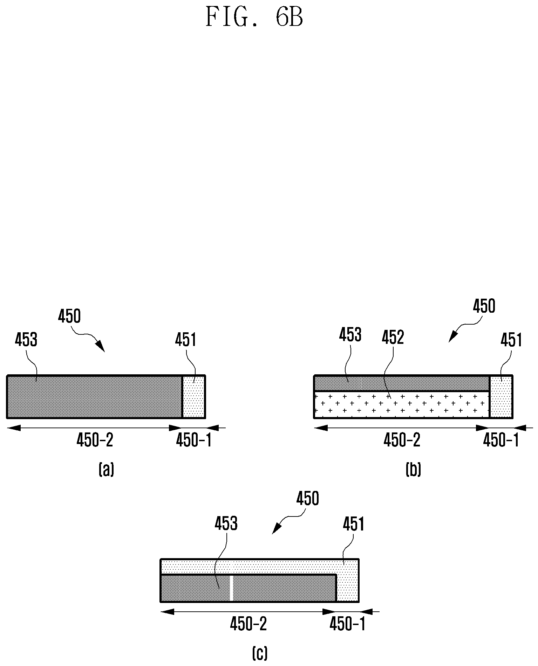

FIG. 5A is a cross-sectional view of the electronic device 300 taken along line A-A in FIG. 2. FIG. 5B is an embodiment of the stacked structure of the support plate 450 shown in FIG. 5A. FIG. 6A is an embodiment of the structure of the support plate 450 when a digitizer panel 460 is disposed inside the electronic device 300 in various embodiments disclosed in this document. FIG. 6B is an embodiment of the structure of the support plate 450 when a digitizer panel 460 is not disposed inside the electronic device 300 in various embodiments disclosed in this document.

According to various embodiments, the lateral member 510 (e.g., lateral bezel structure 218) may be made of a conductive material and may be used as an antenna radiator of the electronic device 300. At least a portion of the lateral member 510 may be included in the antenna (e.g., antenna module 197 in FIG. 1). For example, at least a portion of the lateral member 510 may be used as an antenna radiator of the antenna. In an embodiment, referring to FIG. 5A, the lateral member 510 may be electrically connected to the communication module 190 disposed on a printed circuit board 530 (e.g., board 340 in FIG. 3) to transmit or receive a communication signal (e.g., RF signal) to or from an external device. In an embodiment, the lateral member 510 may be electrically connected to the communication module 190 via an antenna circuit. For example, the antenna circuit may be a component that transfers a radio frequency (RF) signal. The antenna circuit may transfer an RF signal processed by the communication module 190 of the electronic device 300 to the lateral member 510 acting as an antenna, or transfer an RF signal received from the lateral member 510 to the communication module 190.

According to various embodiments, the lateral member 510 may include a plurality of cut-off portions. The lateral member 510 may be physically segmented into multiple parts through multiple cut-off portions. For example, the cut-off portion may be a space formed in the lateral member 510 so that the lateral member 510 may be segmented into multiple parts. In an embodiment, the lateral member 510 may be electrically segmented by disposing an insulating member 511 (e.g., insulating member 511 in FIG. 2A) in the cut-off portion. For example, the insulating member 511 may refer to a material with low conductivity or a material with low permittivity. In an embodiment, when a part of the lateral member 510 is utilized as an antenna of the electronic device 300, the resonance frequency of the antenna may be determined according to the physical length of the part of the lateral member 510. The lateral member 510 may be segmented into a plurality of parts having different lengths by insulating members 511 disposed in the cut-off portions. The electronic device 300 may be capable of communicating in various frequency bands (e.g., short-range communication, long-range communication) by utilizing the side member 510 having different resonant frequencies.

According to various embodiments, the lateral member 510 may be connected to the antenna circuit to function as an antenna for transmitting or receiving a communication signal to or from an external device. In an embodiment, the antenna circuit may include a plurality of circuit parts. For example, the antenna circuit may include various antenna-related circuits such as a matching circuit for impedance matching and a switching circuit for enabling the antenna to correspond to wideband characteristics. In an embodiment, the matching circuit may be a circuit that includes elements such as an inductor or a capacitor for impedance matching. In an embodiment, the switching circuit may increase the physical length of the antenna radiator (e.g., lateral member 510) by shorting antenna radiators that are electrically open to each other. The matching circuit and switching circuit of the circuit parts described above should not be interpreted as being limited by their names, but should be understood as a circuit that includes elements that may perform the corresponding functions. For example, the switching circuit may be referred to as a switching circuit part, and the matching circuit may be referred to as a variable element part. In an embodiment, a portion of the matching circuit or switching circuit among the antenna-related circuits may be omitted.

According to various embodiments, as shown in FIGS. 5A and 5B, the support plate 450 may be disposed below the display panel 430 (e.g., in -z direction in FIG. 5A). In an embodiment, the support plate 450 may be disposed under the display panel 430 to support the display panel 430. The support plate 450 may be disposed below the display panel 430 (e.g., in -z direction in FIG. 5A) to be supported by the bracket 520. As described above, the support plate 450 may be made of a material having rigid properties so that the display panel 430 may be supported. For example, the support plate 450 may include a non-metallic sheet material such as carbon fiber reinforced plastics (CFRP) and/or glass fiber reinforced plastics (GFRP). Additionally, the support plate 450 may include a metal material such as SUS (steel use stainless) or CLAD (e.g., stacked member in which SUS and Al are alternately arranged).

In an embodiment, the digitizer panel 460 for exchanging signals with an electronic pen may be disposed inside the electronic device 300. Referring to FIG. 4, the digitizer panel 460 is disposed under the support plate 450 (e.g., in -z direction in FIG. 4). Since the electronic pen, which generates an electrical signal in close proximity to the digitizer panel 460, approaches or contacts the surface of the display 400, the support plate 450 may be disposed between the electronic pen and the digitizer panel 460. If the support plate 450 includes a metal material such as SUS or CLAD, the electromagnetic signal between the digitizer panel 460 and the electronic pen may be blocked by the support plate 450. Hence, when the digitizer panel 460 is disposed under the support plate 450, the support plate 450 may be made of a dielectric such as carbon fiber reinforced plastics (CFRP) so that the signal between the digitizer panel 460 and the electronic pen is not blocked. For example, the dielectric may be a non-metallic insulating material that has polarity in an electric field (e-field). For example, the dielectric may exhibit polarity through an electric field generated from electronic components inside the electronic device 300. As will be described below, if a dielectric is positioned adjacent to the lateral member 510 being an antenna at least in part, the antenna radiation performance of the electronic device 300 may deteriorate depending on the permittivity of the dielectric and the degree of dielectric loss of electromagnetic waves occurring within the dielectric. For example, power loss may occur in the RF signal of the lateral member 510 serving as an antenna, which may reduce the radiation efficiency of the antenna. Therefore, a dielectric having relatively low permittivity and dielectric loss may be disposed at a portion of the support plate 450 positioned adjacent to the antenna so that the phenomenon of deterioration of the antenna radiation efficiency of the electronic device 300 may be alleviated or resolved.

According to various embodiments, the electronic device 300 may include various types of antennas. In an embodiment, the antenna may include at least a portion of the lateral member 510. As described above, the lateral member 510 is electrically connected to the communication module 190 to transmit or receive a communication signal to or from an external electronic device.

According to various embodiments, the antenna may include a plurality of antenna radiators. In an embodiment, at least a portion of the lateral member 510 is used as an antenna radiator. In an embodiment, the antenna may use a flexible printed circuit board (FPCB) made of a conductive material as a first antenna radiator (not shown). In an embodiment, the antenna may utilize a pattern formed by laser direct structuring (LDS) using a conductive material as a second antenna radiator (not shown).

According to various embodiments, the support plate 450 is disposed below the display panel 430 and be adjacent to the antenna included in the electronic device 300. As described above, if the support plate 450 is made of a dielectric, the radiation performance of the antenna positioned adjacent to the support plate 450 may be deteriorated. For example, if the support plate 450 is disposed adjacent to an antenna radiator, such as the lateral member 510, first antenna radiator, and/or second antenna radiator, the radiation efficiency (or performance) of the antenna may be reduced.

In an embodiment, the support plate 450 is disposed below the display panel 430 and may be adjacent to the lateral member 510. As described above, if the support plate 450 is made of a dielectric, the radiation performance of the antenna including a portion of the lateral member 510 adjacent to the support plate 450 may be deteriorated. For example, the radiation efficiency of the antenna including the lateral member 510 may vary depending on the dielectric properties of the material forming the support plate 450. For example, the dielectric properties may include the permittivity and dielectric loss of the dielectric. The permittivity may be a measure of how much charge is polarized on the dielectric when an electric field is applied to the dielectric. In an embodiment, as the permittivity of the support plate 450 increases, the radiation efficiency of the antenna including the lateral member 510 may decrease due to the polarization phenomenon of the charge generated on the support plate 450. The dielectric loss may be a power loss of an electromagnetic wave (e.g., RF signal) within a dielectric. As the dielectric loss of the electromagnetic wave (e.g., RF signal) occurring in the support plate 450 increases, power loss occurs in the RF signal transferred to the lateral member 510, and thus the radiation efficiency of the antenna including the lateral member 510 may decrease. As another example, if the support plate 450 is disposed adjacent to the first antenna radiator and/or the second antenna radiator, the radiation efficiency of the antenna including the first antenna radiator and/or the second antenna radiator may decrease. For example, as the permittivity of the support plate 450 increases, the radiation efficiency of the antenna including the first antenna radiator and/or the second antenna radiator may decrease due to the polarization phenomenon of the charge occurring in the support plate 450. In addition, as the dielectric loss of the electromagnetic wave (e.g., RF signal) occurring in the support plate 450 increases, power loss occurs in the RF signal transferred to the first antenna radiator and/or the second antenna radiator, and thus the radiation efficiency of the antenna including the first antenna radiator and/or the second antenna radiator may decrease.

According to various embodiments, the support plate 450 may be made of a non-metallic insulating material (e.g., dielectric). The support plate 450 may be disposed under the display panel 430 and be adjacent to the lateral member 510. Meanwhile, the dielectric properties (permittivity, dielectric loss) of the support plate 450 may cause power loss in the RF signal of the lateral member 510. As the permittivity and dielectric loss of the support plate 450 increase, the power loss of the RF signal of the antenna including at least a portion of the lateral member 510 may increase. So, the radiation efficiency of the antenna including at least a portion of the lateral member 510 may be reduced. According to various embodiments disclosed in this document, at least a portion of the support plate 450 may be made of a material having dielectric properties that may reduce power loss of an RF signal radiated from the lateral member 510. For example, at least a portion of the support plate 450 may be made of a material having a low permittivity or dielectric loss. In an embodiment, the support plate 450 may include different materials depending on the relative position with respect to the lateral member 510. For example, a material having dielectric properties that does not reduce the radiation efficiency of the antenna including the lateral member 510 may be disposed in a part (e.g., first region 450-1) of the support plate 450 adjacent to the lateral member 510. Thereby, the reduction in the radiation efficiency of the antenna including at least a portion of the lateral member 510 may decrease. The detailed structure of the support plate 450 will be described later. In a certain embodiment, a material having dielectric properties that does not reduce the radiation efficiency of the antenna including a first antenna radiator and/or a second antenna radiator may be disposed in a part (e.g., first region 450-1) of the support plate 450 adjacent to the first antenna radiator and/or the second antenna radiator. For convenience of description, the structure of the support plate 450 for improving the radiation efficiency of the antenna will be described in relation to the lateral member 510.

According to various embodiments, as shown in FIG. 5B, the support plate 450 may include a first region 450-1 and a second region 450-2. The first region 450-1 may be a part of the support plate 450 that is closer to the lateral member 510 than the second region 450-2. The second region 450-2 is a part of the support plate 450 that is farther from the lateral member 510 than the first region 450-1. For example, the second region 450-2 is positioned relatively farther away from the lateral member 510 than the first region 450-1. In a certain embodiment, the first region 450-1 may be a part of the support plate 450 that is closer to the first antenna radiator and/or the second antenna radiator than the second region 450-2. The second region 450-2 may be a part of the support plate 450 that is farther from the first antenna radiator and/or the second antenna radiator than the first region 450-1.

The first region 450-1 and the second region 450-2 of the support plate 450 described above are distinguished only for the convenience of explanation, and the first region 450-1 and the second region 450-2 may be not visually distinguished regions. In an embodiment, regions of the support plate 450 may be distinguished depending on the positions of the materials (e.g., first member 451, second member 452, and/or third member 453) included in the support plate 450.

According to various embodiments, the first region 450-1 and the second region 450-2 include different materials. In an embodiment, the first region 450-1 of the support plate 450 may include a material having a lower permittivity (e.g., first member 451 in FIG. 5B) than the second region 450-2. As another example, the first region 450-1 may include a material having a lower dielectric loss (e.g., first member 451 in FIG. 5B) than the second region 450-2. For example, a material having a dielectric property that has less influence on radiation efficiency among the materials included in the support plate 450 may be included in the first region 450-1 of the support plate 450 adjacent to the lateral member 510. Hence, the antenna including the lateral member 510 may transmit or receive an RF signal with a specified quality.

According to various embodiments, the first region 450-1 of the support plate 450 may include a first member 451 made of an insulating material. The second region 450-2 of the support plate 450 may include a second member 452 made of an insulating material different from the first member 451. In an embodiment, the first member 451 of the support plate 450 may have a lower permittivity than the second member 452. Additionally, the RF signal transmitted and/or received through the antenna including at least a portion of the lateral member 510 may have a lower dielectric loss in the first member 451 than in the second member 452. In an embodiment, the first member 451 and the second member 452 of the support plate 450 may be materials having different dielectric properties at a specific RF communication frequency. The dielectric properties of a dielectric may vary depending on the band of the RF communication frequency. In an embodiment, in a specific RF communication frequency band, the first member 451 may have a lower permittivity than the second member 452, and the first member 451 may have a lower dielectric loss than the second member 452. For example, in an RF communication frequency range of greater than or equal to about 500 MHz and less than or equal to about 10 GHz, the first member 451 may have a lower permittivity and/or dielectric loss than the second member 452. However, in a band outside of a specific frequency, the first member 451 may have a higher permittivity and/or dielectric loss than the second member 452. For example, at RF communication frequencies outside of the range of greater than or equal to about 500 MHz and less than or equal to about 10 GHz, the first member 451 may have a higher permittivity and/or dielectric loss than the second member 452. For example, the first member 451 and the second member 452 may be made of materials in which the upper-lower relationships in the permittivity and in the dielectric loss between the first member 451 and the second member 452 do not change in a specific RF communication frequency range of the lateral member 510.

However, the RF communication frequency band (e.g., greater than or equal to about 500 MHz and less than or equal to about 10 GHz) in which the upper-lower relationships in the permittivity and in the dielectric loss between the first member 451 and the second member 452 do not change is only an example, and may be modified in various ways within a range that can be carried out by a person skilled in the art.

In an embodiment, as described above, the first region 450-1 may include a material having a lower permittivity and/or dielectric loss than the second region 450-2 in a specific RF communication frequency range (e.g., range of RF communication frequencies transmitted and/or received through the antenna including at least a portion of the lateral member 510). For example, the first region 450-1 may include a material (e.g., first member 451) that includes glass fibers such as glass fiber reinforced plastics (GFRP). The second region 450-2 may include a material (e.g., second member 452) that includes carbon fibers such as carbon fiber reinforced plastics (CFRP). In addition, the first region 450-1 of the support plate 450 may include a material having a lower dielectric constant and/or dielectric loss than the second region 450-2 in a specific RF communication frequency range.

According to various embodiments disclosed in this document, the support plate 450 may be disposed under the display panel 430 and be adj acent to the radiator of the antenna (e.g., lateral member 510). For example, the support plate 450 may include a first region 450-1 adjacent to the lateral member 510 and a second region 450-2 excluding the first region 450-1. In the first region 450-1, a material having dielectric properties that do not lower the radiation efficiency of the antenna including the lateral member 510 relatively more than in the second region 450-2 may be disposed. For example, the first member 451 having a lower permittivity and/or dielectric loss than the second member 452 may be disposed in the first region 450-1, and the second member 452 may be disposed in the second region 450-2. In this case, the phenomenon of deterioration in radiation performance of the antenna including the lateral member 510 may be alleviated or resolved compared to a case where the support plate 450 is made of the second member 452 and is disposed adjacent to the lateral member 510.

According to various embodiments, as shown in FIG. 5B, the support plate 450 may support the display panel 430 substantially through the second region 450-2. In an embodiment, in the support plate 450, the second region 450-2 may be formed to have a width (e.g., length in Y-axis direction in FIG. 5B) relatively wider than that of the first region 450-1 so that the display panel 430 may be supported through the second region 450-2. In an embodiment, the second region 450-2 of the support plate 450 may include a material having relatively higher strength and rigidity than the first region 450-1. The second member 452 included in the second region 450-2 may have relatively higher strength and rigidity than the first member 451 included in the first region 450-1. For example, the second member 452 may be made of a material including carbon fibers (e.g., CFRP), and the first member 451 may be made of a material including glass fibers (e.g., GFRP). Hence, the support plate 450 may substantially support the display panel 430 through the second region 450-2.

According to various embodiments, the first region 450-1 and the second region 450-2 of the support plate 450 may include various materials. In an embodiment, the support plate 450 may be in a form where the first member 451 and the second member 452 are stacked. For example, referring to FIG. 5B, the second region 450-2 of the support plate 450 may be in a form where the first member 451 and the second member 452 are stacked. The first region 450-1 of the support plate 450 may include the first member 451 extended from the second region 450-2 and a dummy member 454 stacked on the first member 451. Referring to FIG. 5B, the dummy member 454 may be stacked on the first member 451 so that the step difference between the first region 450-1 and the second region 450-2 may be compensated.

In an embodiment, the dummy member 454 may be made of a plastic material such as epoxy resin. In an embodiment, the dummy member 454 may be a material that has less influence on the radiation efficiency of the antenna including at least a portion of the lateral member 510 compared to the second member 452 included in the second region 450-2. A material having a relatively lower permittivity and/or dielectric loss than that of the second member 452, such as the first member 451 or the dummy member 454, may be disposed in the first region 450-1 of the support plate 450. Thereby, the phenomenon of radiation performance deterioration of the antenna including at least a portion of the side member 510 may be alleviated or resolved.

According to various embodiments, as shown in FIGS. 5A and 5B, the first region 450-1 of the support plate 450 may include a protrusion 455. The protrusion 455 may be a portion of the first region 450-1 of the support plate 450 that at least partially protrudes toward the lateral member 510. For example, the protrusion 455 may be a part of the support plate 450 that protrudes relative to other components included in the display 400 such as the display panel 430 and/or the digitizer panel 460. When an external impact is applied to the lateral member 510, the protrusion 455 may act as a buffer against the external impact. Hence, when an external impact is applied to the lateral member 510, the protrusion 455 of the support plate 450 may act as a buffer, which may protect the components included in the display 400 such as the display panel 430 or the digitizer panel 460.

According to various embodiments, as shown in FIGS. 6A and 6B, various materials may be stacked on the support plate 450. In an embodiment, FIG. 6A illustrates a stacked structure of various materials included in the support plate 450 when the support plate 450 is positioned between the display panel 430 and the digitizer panel 460. As described above, when the digitizer panel 460 is positioned under the support plate 450, the support plate 450 may be made of an insulating material so that an electromagnetic signal may be transferred between the electronic pen and the digitizer panel 460. In an embodiment, FIG. 6B illustrates a stacked structure of various materials forming the support plate 450 when the digitizer panel 460 is not disposed inside the electronic device 300. If the digitizer panel 460 is not positioned under the support plate 450, the support plate 450 may include a metal material (e.g., SUS, CLAP) so that the display panel 430 may be supported.

In an embodiment, with reference to FIG. 6A, the support plate 450 may include a first member 451 and a second member 452. In one embodiment, referring to part (a) of FIG. 6A, the first region 450-1 of the support plate 450 may include the first member 451 made of an insulating material, and the second region 450-2 may include the second member 452 made of an insulating material different from that of the first member 451.

In an embodiment, referring to part (b) of FIG. 6A, the first member 451 may be included in the first region 450-1 of the support plate 450, and the second member 452 and the first member 451 extended from the first region 450-1 may be stacked and disposed in the second region 450-2. In addition, the support plate 450 may be made of various insulating materials so as to enable signal transmission between the electronic pen and the digitizer panel 460.

In an embodiment, with reference to FIG. 6B, the support plate 450 may include a first member 451, a second member 452, and/or a third member 453.

Referring to part (a) of FIG. 6B, the first member 451 made of an insulating material may be included in the first region 450-1 of the support plate 450, and the third member 453 made of a metal material (e.g., SUS or CLAD) may be disposed in the second region 450-2. As described above, the second region 450-2 of the support plate 450 may be a region that substantially supports the display panel 430. When the third member 453 made of a metal material is disposed in the second region 450-2 of the support plate 450, the support force for the display panel 430 may increase compared to the case where the second member 452 made of an insulating material is disposed.

In an embodiment, referring to part (b) of FIG. 6B, the first member 451 may be included in the first region 450-1 of the support plate 450, and the second member 452 and the third member 453 may be stacked in the second region 450-2.

In an embodiment, referring to part (c) of FIG. 6B, the first member 451 may be included in the first region 450-1 of the support plate 450, and the third member 453 and the first member 451 extended from the first region 450-1 may be disposed in the second region 450-2. In addition, various materials may be stacked in various ways in the first region 450-1 and the second region 450-2 of the support plate 450.

Meanwhile, a current may be induced to the support plate 450 from the electronic components disposed inside the electronic device 300. If the current induced in the support plate 450 is not discharged to the surroundings, the radiation efficiency of the antenna including the lateral member 510 may be deteriorated. As shown in FIG. 6B, the third member 453 included in the support plate 450 may have higher electrical conductivity than the first member 451 or the second member 452 made of an insulating material because it is made of a metal material. In this case, as the current induced in the support plate 450 is discharged to the surroundings, the phenomenon of the radiation efficiency deterioration of the antenna including the lateral member 510 due to the current induced in the support plate 450 may be alleviated or resolved.

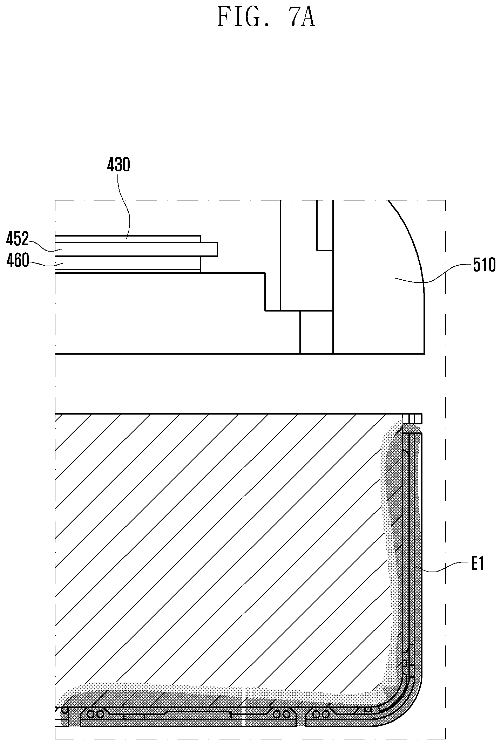

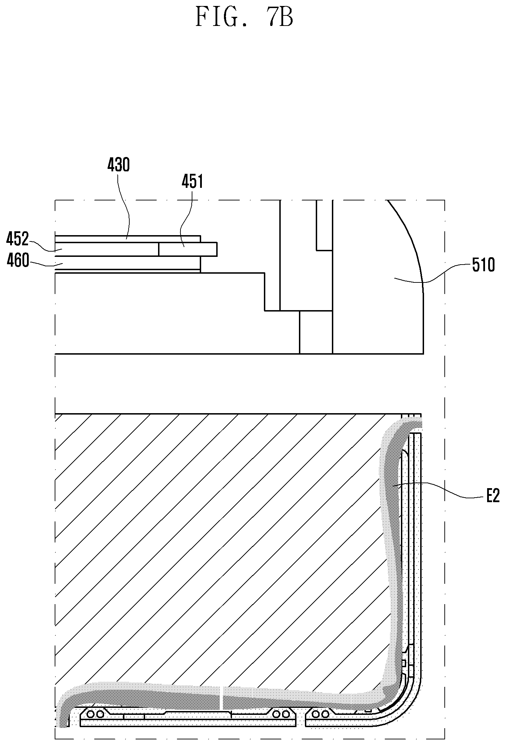

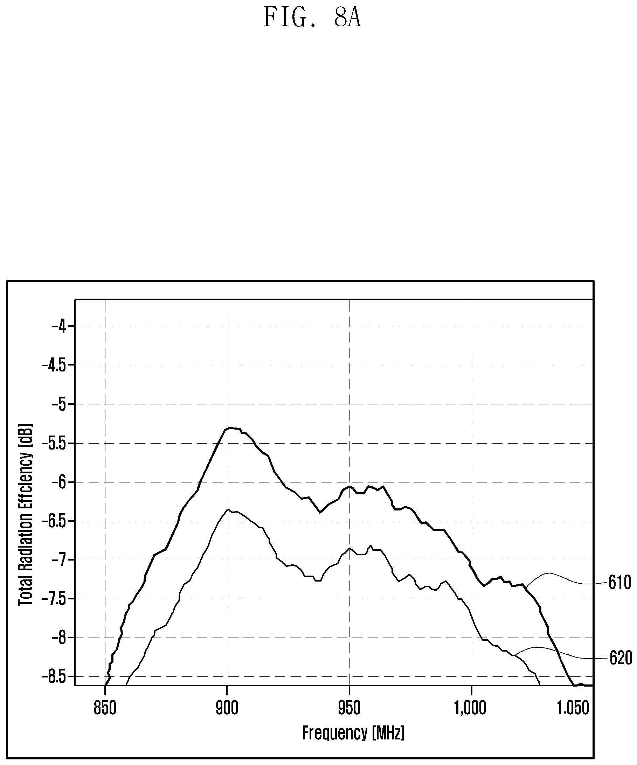

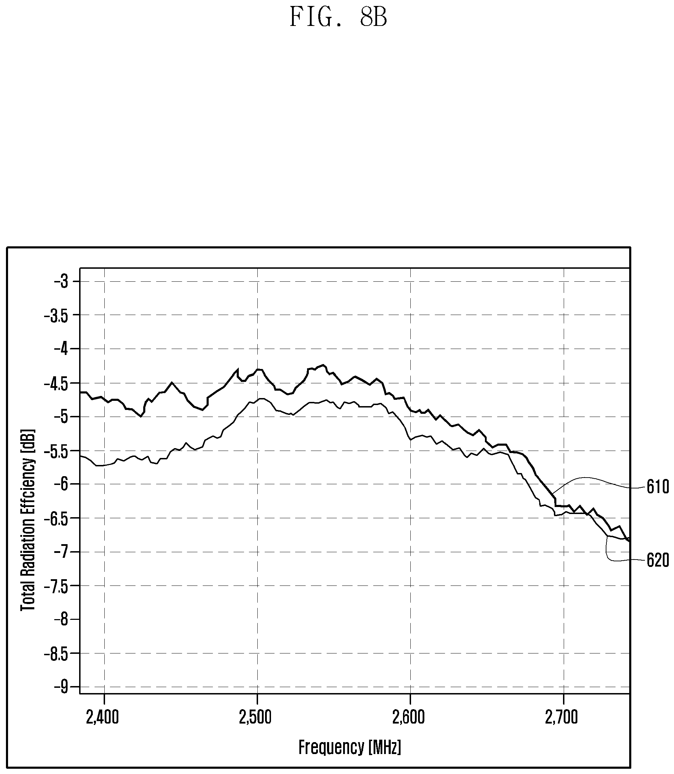

FIGS. 7A and 7B are diagrams illustrating the radiation performance of the antenna according to the material included in the support plate 450. FIGS. 8A and 8B are diagrams illustrating the radiation performance of the antenna including at least a portion of the lateral member according to the frequency band.

With reference to FIG. 7A and FIG. 7B, the radiation performance of the antenna according to the material included in the support plate 450 may be identified. FIG. 7A is a diagram illustrating the radiation performance of the antenna including at least a portion of the lateral member 510 when the second member 452 having a higher permittivity and/or dielectric loss than the first member 451 is included in the first region 450-1 and the second region 450-2 of the support plate 450. In comparison, FIG. 7B is a diagram illustrating the radiation performance of the antenna including at least a portion of the lateral member 510 when the first member 451 having a lower permittivity and/or dielectric loss than the second member 452 is disposed in the first region 450-1 of the support plate 450 adjacent to the lateral member 510. As shown in FIG. 7A, when the second member 452 having a higher permittivity and/or dielectric loss than the first member 451 is disposed in the first region 450-1 of the support plate 450, the power loss of an RF signal transferred to the antenna including at least a portion of the lateral member 510 may be greater than the case where the first member 451 is disposed in the first region 450-1 of the support plate 450 adjacent to the lateral member 510. In such a case, the radiation performance of the antenna including at least a portion of the lateral member 510 may be reduced. Hence, as shown in FIG. 7A, the amount (E1) of electromagnetic waves that are not radiated from the lateral member 510 and are induced inside the electronic device 300 may increase.

On the other hand, as shown in FIG. 7B, the first member 451 may be disposed in the first region 450-1 of the support plate 450 adjacent to the lateral member 510 acting as an antenna radiator. The first member 451 may have a lower permittivity and/or dielectric loss than the second member 452. Hence, the RF signal transferred to the lateral member 510 may have less power loss compared to the case where the second member 452 is disposed in the first region 450-1 of the support plate 450. In this case, as the first member 451 is disposed in the first region 450-1 of the support plate 450, the deterioration of the antenna radiation performance of the lateral member 510 may be reduced. Additionally, as shown in FIG. 7B, the amount (E2) of electromagnetic waves that are not radiated from the lateral member 510 and are induced inside the electronic device 300 may decrease.

According to various embodiments, as shown in FIGS. 8A and 8B, the radiation efficiency of the antenna including at least a portion of the lateral member 510 may be different in a case where the first member 451 is disposed in the first region 450-1 of the support plate 450 and in a case where the second member 452 is disposed in the first region 450-1 of the support plate 450. Referring to FIGS. 8A and 8B, the radiation efficiency (610) of the antenna when the first member 451 is disposed in the first region 450-1 of the support plate 450 may be higher than the radiation efficiency (620) of the antenna when the support plate 450 is composed of the second member 452 (e.g., when the second member 452 is disposed in the first region 450-1 of the support plate 450). As described above, the first member 451 and the second member 452 included in the support plate 450 may be materials having different dielectric properties at a specific RF communication frequency. For example, the first member 451 and the second member 452 may be made of a materials in which the upper-lower relationships in the permittivity and in dielectric loss between the first member 451 and the second member 452 do not change in a specific RF communication frequency range of the antenna including at least a portion of the lateral member 510. Referring to FIG. 8A, in the band of greater than or equal to about 850 MHz and less than or equal to about 1050 MHz, the first member 451 may be a material having a lower permittivity and/or dielectric loss than the second member 452. Also, referring to FIG. 8B, in the band of greater than or equal to about 2400 MHz and less than or equal to about 2700 MHz, the first member 451 may be a material having a lower permittivity and/or dielectric loss than the second member 452. Hence, when the first member 451 is disposed in the first region 450-1 of the support plate 450, the power loss of the RF signal transferred to the lateral member 510 may be reduced compared to when the second member 452 is disposed in the first region 450-1 of the support plate 450. Consequently, the radiation performance of the antenna including at least a portion of the lateral member 510 may be improved.

In the above description, the support plate 450 disclosed in this document is assumed to be disposed in the electronic device 300 of a bar type. However, the support plate 450 disclosed in this document is not limited to being disposed only in the bar type electronic device 300. The support plate 450 disclosed in this document may be used not only in bar-type electronic devices 300 but also in electronic devices having various form factors such as foldable, rollable, or stretchable.

Additionally, in the above description, the first region 450-1 and the second region 450-2 of the support plate 450 are divided based on the distance from the lateral member 510. In a certain embodiment, the first region 450-1 may be a part of the support plate 450 that is closer to the first antenna radiator and/or the second antenna radiator than the second region 450-2. The second region 450-2 may be a part of the support plate 450 that is farther from the first antenna radiator and/or the second antenna radiator than the first region 450-1. According to various embodiments disclosed in this document, the first member 451 may be disposed in the first region 450-1 of the support plate 450. The first member 451 may be a material having a lower permittivity and/or dielectric loss than the second member 452. Hence, when the first member 451 is disposed in the first region 450-1 of the support plate 450, the power loss of the RF signal transferred to the first antenna radiator and/or the second antenna radiator may be reduced compared to when the second member 452 is disposed in the first region 450-1 of the support plate 450. Consequently, the radiation performance of the antenna including the first antenna radiator and/or the second antenna radiator may be improved.

An electronic device 300 (e.g., electronic device 101 in FIG. 1 or electronic device 200 of FIG. 2A) according to various embodiments disclosed in this document may include: a display 400 including a display panel 430; a lateral member 510 (e.g., lateral bezel structure 218 in FIG. 2A) made of a conductive material and disposed so that at least a part thereof surrounds the display; a communication module (e.g., communication module 190 in FIG. 1) electrically connected to the lateral member so that the lateral member functions as an antenna; and a support plate 450 disposed below the display panel (e.g., in -Z direction in FIG. 5A) and including a first region 450-1 adjacent to the lateral member and a second region 450-2 excluding the first region, wherein the first region and the second region of the support plate may include different materials.

In addition, the first region of the support plate may include a material having different dielectric properties from the second region at RF communication frequencies.

In addition, the first region of the support plate may include a material (e.g., first member 451 in FIG. 5B) having a lower permittivity than the second region of the support plate at the RF communication frequencies.

In addition, the first region of the support plate may include a material (e.g., first member 451 in FIG. 5B) having a lower dielectric loss than the second region of the support plate at the RF communication frequencies.

In addition, the RF communication frequencies may be greater than or equal to 500 MHz and less than or equal to 10 GHz.

In addition, at least a portion of the first region of the support plate may include a material including glass fiber (e.g., first member 451 in FIG. 5B), and at least a portion of the second region of the support plate may include a material including carbon fiber (e.g., second member 452 in FIG. 5B).

In addition, at least a portion of the first region of the support plate may further protrude toward the lateral member relative to the display panel.

In addition, the second region of the support plate may include a first member 451 and a second member 452 stacked on the first member and having different dielectric properties from the first member, and the first region of the support plate may include the first member extended from the second region and a dummy member 454 stacked on the first member to compensate for the step difference between the first region and the second region.

In addition, the second region of the support plate may include a metal material.

In addition, the electronic device may further include a digitizer panel 460 disposed below the support plate (e.g., in -Z direction in FIG. 5A).

In addition, at least a portion of the first region of the support plate may further protrude toward the lateral member relative to the digitizer panel.

A display structure of an electronic device 300 (e.g., electronic device 101 in FIG. 1 or electronic device 200 in FIG. 2A) according to various embodiments disclosed in this document may include: a display 400 that is at least partially surrounded by a lateral member 510 (e.g., lateral bezel structure 218 in FIG. 2A) constituting the external appearance of the electronic device and made of a conductive material, and includes a display panel 430; and a support plate 450 disposed below the display panel (e.g., in -Z direction in FIG. 5A) and including a first region 450-1 adjacent to the lateral member and a second region 450-2 excluding the first region, wherein the first region and the second region of the support plate may include different materials.

In addition, the first region of the support plate may include a material having different dielectric properties from the second region at RF communication frequencies.

In addition, the first region of the support plate may include a material (e.g., first member 451 in FIG. 5B) having a lower permittivity than the second region of the support plate at the RF communication frequencies.

In addition, the first region of the support plate may include a material (e.g., first member 451 in FIG. 5B) having a lower dielectric loss than the second region of the support plate at the RF communication frequencies.

In addition, the RF communication frequencies may be greater than or equal to 500 MHz and less than or equal to 10 GHz.

In addition, at least a portion of the first region of the support plate may include a material including glass fiber (e.g., first member 451 in FIG. 5B), and at least a portion of the second region of the support plate may include a material including carbon fiber (e.g., second member 452 in FIG. 5B).

In addition, at least a portion of the first region of the support plate may further protrude toward the lateral member relative to the display panel.

In addition, the second region of the support plate may include a first member 451 and a second member 452 stacked on the first member and having different dielectric properties from the first member, and the first region of the support plate may include the first member extended from the second region and a dummy member 454 stacked on the first member to compensate for the step difference between the first region and the second region.

In addition, the display structure may further include a digitizer panel 460 disposed below the support plate (e.g., in -Z direction in FIG. 5A), and at least a portion of the first region of the support plate may further protrude toward the lateral member relative to the digitizer panel.

Further, the embodiments disclosed in this specification and drawings are only specific examples presented to easily explain the technical contents according to the embodiments disclosed in this document and to help understand the embodiments disclosed in this document, and are not intended to limit the scope of the embodiments disclosed in this document. Therefore, the scope of the various embodiments disclosed in this document should be interpreted as including both those embodiments disclosed herein and all changes or modifications derived based on the technical ideas of the various embodiments disclosed in this document.

## Claims

1. An electronic device (101, 200, 300) comprising:
a lateral member (510) including a conductive material and forming an exterior of the electronic device;
a communication module (190) electrically connected to the lateral member to enable the lateral member to function as an antenna; and
a display (201, 330, 400) at least partially surrounded by the lateral member, the display comprising:
a display panel (430),
a digitizer panel (460) disposed under the display panel, and
a support plate (450) disposed between the display panel and the digitizer panel, the support plate including a first region (450-1) adjacent to the lateral member and a second region (450-2) spaced farther from the lateral member than the first region,
wherein the first region and the second region of the support plate include different materials.

2. The electronic device of claim 1, wherein the first region of the support plate includes a material having different dielectric properties from the second region at RF communication frequencies.

3. The electronic device of claim 2, wherein the first region of the support plate includes a material having a lower permittivity than the second region of the support plate at the RF communication frequencies.

4. The electronic device of claim 2, wherein the first region of the support plate includes a material having a lower dielectric loss than the second region of the support plate at the RF communication frequencies.

5. The electronic device of claim 2, wherein the RF communication frequencies are greater than or equal to 500 MHz and less than or equal to 10 GHz.

6. The electronic device of claim 1, wherein:
at least a portion of the first region of the support plate includes a material including glass fiber; and
at least a portion of the second region of the support plate includes a material including carbon fiber.

7. The electronic device of claim 1, wherein at least a portion of the first region of the support plate further protrudes toward the lateral member relative to the display panel.

8. The electronic device of claim 1, wherein:
the second region of the support plate includes a first member (451), and a second member (452) stacked on the first member and having different dielectric properties from the first member; and
the first region of the support plate includes the first member extended from the second region, and a dummy member stacked on the first member to compensate for a step difference between the first region and the second region.

9. The electronic device of claim 1, wherein the second region of the support plate includes a metal material.

10. The electronic device of claim 1, wherein at least a portion of the first region of the support plate further protrudes toward the lateral member relative to the digitizer panel.

## Patentansprüche

1. Elektronische Vorrichtung (101, 200, 300), umfassend:
ein seitliches Element (510), das ein leitfähiges Material enthält und eine Außenseite der elektronischen Vorrichtung bildet;
ein Kommunikationsmodul (190), das elektrisch mit dem seitlichen Element verbunden ist, damit das seitliche Element als Antenne fungieren kann; und
eine Anzeige (201, 330, 400), die zumindest teilweise von dem seitlichen Element umgeben ist, wobei die Anzeige Folgendes umfasst:
ein Anzeigefeld (430),
ein unter dem Anzeigefeld angeordnetes Digitalisierfeld (460) und
eine zwischen dem Anzeigefeld und dem Digitalisierfeld angeordnete Stützplatte (450), wobei die Stützplatte einen ersten Bereich (450-1), der an das seitliche Element angrenzt, und einen zweiten Bereich (450-2) umfasst, der weiter vom seitlichen Element entfernt ist als der erste Bereich,
wobei der erste Bereich und der zweite Bereich der Stützplatte unterschiedliche Materialien umfassen.

2. Elektronische Vorrichtung nach Anspruch 1, wobei der erste Bereich der Stützplatte ein Material umfasst, das bei RF-Kommunikationsfrequenzen andere dielektrische Eigenschaften als der zweite Bereich aufweist.

3. Elektronische Vorrichtung nach Anspruch 2, wobei der erste Bereich der Stützplatte ein Material umfasst, das bei den RF-Kommunikationsfrequenzen eine geringere Permittivität als der zweite Bereich der Stützplatte aufweist.

4. Elektronische Vorrichtung nach Anspruch 2, wobei der erste Bereich der Stützplatte ein Material umfasst, das bei den RF-Kommunikationsfrequenzen einen geringeren dielektrischen Verlust aufweist als der zweite Bereich der Stützplatte.

5. Elektronische Vorrichtung nach Anspruch 2, wobei die RF-Kommunikationsfrequenzen größer oder gleich 500 MHz und kleiner oder gleich 10 GHz sind.

6. Elektronische Vorrichtung nach Anspruch 1, wobei:
mindestens ein Abschnitt des ersten Bereichs der Stützplatte ein Material umfasst, das Glasfasern enthält; und
mindestens ein Abschnitt des zweiten Bereichs der Stützplatte ein Material umfasst, das Kohlenstofffasern enthält.

7. Elektronische Vorrichtung nach Anspruch 1, wobei mindestens ein Abschnitt des ersten Bereichs der Stützplatte relativ zum Anzeigefeld weiter in Richtung des seitlichen Elements vorsteht.

8. Elektronische Vorrichtung nach Anspruch 1, wobei:
der zweite Bereich der Stützplatte ein erstes Element (451) und ein zweites Element (452) umfasst, das auf dem ersten Element gestapelt ist und andere dielektrische Eigenschaften als das erste Element aufweist; und
der erste Bereich der Stützplatte das erste Element, das sich vom zweiten Bereich erstreckt, und ein Dummy-Element umfasst, das auf dem ersten Element gestapelt ist, um einen Stufenunterschied zwischen dem ersten Bereich und dem zweiten Bereich auszugleichen.

9. Elektronische Vorrichtung nach Anspruch 1, wobei der zweite Bereich der Stützplatte ein Metallmaterial umfasst.

10. Elektronische Vorrichtung nach Anspruch 1, wobei mindestens ein Abschnitt des ersten Bereichs der Stützplatte relativ zum Digitalisierfeld weiter in Richtung des seitlichen Elements vorsteht.

## Revendications

1. Dispositif électronique (101, 200, 300) comprenant :
un élément latéral (510) comportant un matériau conducteur et formant un extérieur du dispositif électronique ;
un module de communication (190) électriquement relié à l'élément latéral afin de permettre à l'élément latéral de fonctionner comme antenne ; et
un afficheur (201, 330, 400) au moins partiellement entouré par l'élément latéral, l'afficheur comprenant :
un panneau d'affichage (430),
un panneau numériseur (460) disposé sous le panneau d'affichage, et
une plaque de support (450) disposée entre le panneau d'affichage et le panneau numériseur, la plaque de support comportant une première région (450-1) adjacente à l'élément latéral et une seconde région (450-2) espacée plus loin de l'élément latéral que la première région,
dans lequel la première région et la seconde région de la plaque de support comportent des matériaux différents.

2. Dispositif électronique selon la revendication 1, dans lequel la première région de la plaque de support comporte un matériau ayant des propriétés diélectriques différentes de celles de la seconde région aux fréquences de communication RF.

3. Dispositif électronique selon la revendication 2, dans lequel la première région de la plaque de support comporte un matériau ayant une permittivité inférieure à la seconde région de la plaque de support aux fréquences de communication RF.

4. Dispositif électronique selon la revendication 2, dans lequel la première région de la plaque de support comporte un matériau ayant une perte diélectrique inférieure àla seconde région de la plaque de support aux fréquences de communication RF.

5. Dispositif électronique selon la revendication 2, dans lequel les fréquences de communication RF sont supérieures ou égales à 500 MHz et inférieures ou égales à 10 GHz.

6. Dispositif électronique selon la revendication 1, dans lequel :
au moins une partie de la première région de la plaque de support comporte un matériau comportant de la fibre de verre ; et
au moins une partie de la seconde région de la plaque de support comporte un matériau comportant de la fibre de carbone.

7. Dispositif électronique selon la revendication 1, dans lequel au moins une partie de la première région de la plaque de support fait en outre saillie vers l'élément latéral par rapport au panneau d'affichage.

8. Dispositif électronique selon la revendication 1, dans lequel :
la seconde région de la plaque de support comporte un premier élément (451) et un second élément (452) empilé sur le premier élément et ayant des propriétés diélectriques différentes de celles du premier élément ; et
la première région de la plaque de support comporte le premier élément s'étendant depuis la seconde région, et un élément factice empilé sur le premier élément afin de compenser une différence d'étape entre la première région et la seconde région.

9. Dispositif électronique selon la revendication 1, dans lequel la seconde région de la plaque de support comporte un matériau métallique.

10. Dispositif électronique selon la revendication 1, dans lequel au moins une partie de la première région de la plaque de support fait en outre saillie vers l'élément latéral par rapport au panneau numériseur.
